# EUROPÄISCHE PATENTSCHRIFT

(11) **EP 0 845 017 B1**
(45) Veröffentlichungstag und Bekanntmachung des Hinweises auf die Patenterteilung: **02.11.2000**
(21) Anmeldenummer: 96929251.5
(22) Anmeldetag: 13.08.1996
(51) Int. Cl.: C09D 5/44

(54) **EINBRENNÜBERZUGSMITTEL UND VERWENDUNG DESSELBEN**
BAKING COATING AGENT AND USE THEREOF
AGENT DE RECOUVREMENT THERMODURCISSABLE ET SON UTILISATION

(30) Priorität: 17.08.1995 DE 19530225
(43) Veröffentlichungstag der Anmeldung: 03.06.1998
(73) Patentinhaber: E.I. DU PONT DE NEMOURS AND COMPANY, Wilmington Delaware 19898 (US)
(72) Erfinder: BLUM, Joachim, D-42897 Remscheid (DE); KLEIN, Klausjörg, D-42289 Wuppertal (DE); PATZSCHKE, Hans-Peter, D-42279 Wuppertal (DE); VOGT-BIRNBRICH, Bettina, D-42719 Solingen (DE)
(74) Vertreter: Gille Hrabal Struck Neidlein Prop Roos
(86) Internationale Anmeldenummer: EP9603578
(87) Internationale Veröffentlichungsnummer: WO9707170

(56) Entgegenhaltungen:
- EP-A- 0 149 156
- EP-A- 0 303 158
- EP-A- 0 661 354
- EP-A- 0 661 355

## Beschreibung

Die vorliegende Erfindung betrifft Einbrennüberzugsmittel, die durch Additionsreaktionen vernetzen, ohne daß Abspaltverluste aus dem Überzugsfilm auftreten,, sowie deren Verwendung für das kathodische Elektrotauchlackierverfahren.
In der Praxis sind durch verschiedenartige Vernetzungsmechanismen aushärtende Überzugsmittel eingeführt. Herausragende Bedeutung haben dabei insbesondere aminharzvernetzende, über blockierte Polyisocyanate oder durch Umesterung vernetzende Lacksysteme erlangt. Diese Lacksysteme - auf der Basis organischer Lösemittel oder bevorzugt auf wäßriger Basis formuliert - haben gemeinsam, daß sie beim Einbrennen Abspaltverluste erleiden. Beispielsweise werden Veretherungs- bzw. Veresterungsalkohole, Formaldehyd oder Blockierungsmittel abgespalten, was zur Reinigung der aus dem Einbrennofen abgeführten Abluft zwingt und einen unerwünschten Verlust an Lackfestkörper darstellt. Insbesondere problematisch sind solche Abspaltprodukte, die im Einbrennofen kondensieren und dort zu Verunreinigungen führen.

In der EP-A-0 303 158 werden härtbare stickstoffbasische Gruppen tragende Verbindungen beschrieben, die im wesentlichen aus Struktureinheiten bestehen, die hergestellt wurden durch Umsetzung von A) einer Verbindung, die im Mittel mindestens eine endständige 2-Oxo-1,2-dioxolangruppe pro Molekül enthält, mit B), einem disekundären Amin mit zu den sekundären Aminogruppen β-ständigen Hydroxylgruppen und gegebenenfalls C) einem difunktionellen Amin. Die endständigen 2-Oxo-1,2-oxolangruppen reagieren bei der Herstellung der härtbaren Verbindungen (Bindemittel) mit den disekundären Aminen und stehen für spätere Einbrennreaktionen nicht mehr als Vernetzergruppen zur Verfügung.

Aus der EP-A-0 356 970 ist ein ohne Abspaltverluste einbrennbares kathodisch abscheidbares Überzugsmittel bekannt, basierend auf einem hydroxyfunktionellen kationischen Harz und einem Polyepoxidvernetzer, dessen Epoxidgruppen alicyclisch gebunden sind. Derartige Lacksysteme besitzen Stabilitätsprobleme, im Überzugsmittel können Vernetzungsreaktionen bis hin zur Gelbildung auftreten.
Polyepoxidverbindungen können in arbeitshygienischer Hinsicht problematisch sein.

Die EP-A-0 661 354 beschreibt ein Verfahren zur kathodischen Elektrotauchlackierung (KTL) unter Verwendung eines KTL-Überzugsmittels auf Basis eines Primäramin-funktionellen Bindemittels und eines Vernetzers mit cyclischen Carbonatgruppen im Molekül. Die KTL-Überzugsmittel weisen Stabilitätsprobleme auf und die ihnen zugrundeliegenden Bindemittel werden, um diesem Problem zu begegnen, bevorzugt hoch neutralisiert (typischer Neutralisationsgrad mindestens 80 % und bevorzugter Neutralisationsgrad zwischen 90 und 100 %). Hohe Neutralisationsgrade führen u.a. beispielsweise zu einem verschlechterten Umgriff bei der kathodischen Elektroabscheidung und können damit zu einem unzureichenden Korrosionsschutz bei der KTL-Lackierung dreidimensionaler Substrate, die Hohlräume aufweisen, wie z.B. Automobilkarossen, führen.

Aufgabe der Erfindung ist die Bereitstellung eines ohne Abspaltverluste einbrennbaren Überzugsmittels, das keine Stabilitätsprobleme aufweist und niedrig neutralisiert werden kann.

Die Lösung der Aufgabe besteht in der Bereitstellung eines wäßrigen Einbrennüberzugsmittels für das kathodische Elektrotauchlackverfahren, welches ein oder mehrere Bindemittel mit kationischen und/oder in kationische Gruppen überführbaren Gruppen sowie sekundäre Amin- und/oder Hydroxylgruppen sowie einen oder mehrere Vernetzer mit cyclischen Carbonatgruppen oder ein selbstvernetzbares Bindemittel mit kationischen und/oder in kationische Gruppen überführbaren Gruppen, sekundären Amin- und/oder Hydroxylgruppen sowie cyclische Carbonatgruppen enthält, wobei die Bindemittel ausgewählt sind aus Amino(meth)acrylatharzen und/oder durch Additionsreaktion von Aminverbindungen an die Epoxidgruppen von Epoxidharzen herstellbaren üblichen Aminoepoxidharzen. Unter Epoxidharzen sind in diesem Zusammenhang an den Epoxidgruppen nicht modifizierte Polyepoxidverbindungen, bevorzugt die bekannten aromatischen Epoxidharze, insbesondere bevorzugt beispielsweise auf Basis von Bisphenol A zu verstehen. Als Aminverbindungen können Amine oder Aminoalkahole mit mindestens einer primären oder sekundären Amingruppe im Molekül dienen. Sind primäre Amingruppen im Molekül der Aminverbindung vorhanden, so sind diese bevorzugt nicht vorübergehend geschützt, beispielsweise als Ketimingruppen.

Gemäß einer bevorzugten Ausführungsform werden Einbrennüberzugsmittel bereitgestellt, welche ein oder mehrere von primären Amingruppen freie Bindemittel mit kationischen und/oder in kationische Gruppen überführbaren Gruppen sowie sekundären Amin- und/oder Hydroxylgruppen sowie einen oder mehrere Vernetzer mit cyclischen Carbonatgruppen oder ein selbstvernetzbares Bindemittel mit kationischen und/oder in kationische Gruppen überführbaren Gruppen, sekundären Amin- und/oder Hydroxylgruppen sowie cyclischen Carbonatgruppen enthalten, wobei die Bindemittel ausgewählt sind aus Amino(meth)acrylatharzen und/oder durch Additionsreaktion von Aminverbindungen an die Epoxidgruppen von Epoxidharzen hergestellten üblichen Aminoepoxidharzen.

Bei dem erfindungsgemäßen Überzugsmittel kann es sich um ein selbst- oder bevorzugt fremdvernetzendes Überzugsmittel handeln, d.h. die cyclischen Carbonatgruppen können sich am Bindemittel befinden, welches kationische und/oder in kationische Gruppen überführbare Gruppen sowie sekundäre Amin- und/oder Hydroxylgruppen trägt oder das Überzugsmittel enthält bevorzugt einen separaten cyclische Carbonatgruppen tragenden Vernetzer für das Bindemittel, welches kationische und/oder in kationische Gruppen überführbare Gruppen sowie sekundäre Amino- und/oder Hydroxylgruppen besitzt. Bevorzugt enthalten sowohl Bindemittel als auch die cyclische Carbonatgruppen enthaltenden Vernetzer im wesentlichen keine Epoxidgruppen.

Als Bindemittelharze dienen erfindungsgemäß Amino(meth)acrylatharze und/oder durch Additionsreaktion von Aminverbindungen an die Epoxidgruppen von Epoxidharzen hergestellte übliche Aminoepoxidharze mit kationischen Gruppen oder basischen Gruppen, die in kationische Gruppen überführt werden können, sowie aktiven Wasserstoff enthaltenden Gruppen in Form sekundärer Amin- und/oder Hydroxylgruppen. Sie sind bevorzugt frei von primären Amingruppen oder durch Schutzgruppen vorübergehend geschützten primären Amingruppen, wie z.B. Ketimingruppen. Basische, in kationische Gruppen überführbare Gruppen und aktiven Wasserstoff enthaltende Gruppen können vollständig oder teilweise identisch sein, d.h. die basischen, in kationische Gruppen überführbaren Gruppen können zugleich aktiven Wasserstoff enthalten. Besonders bevorzugte kationische Gruppen oder basische Gruppen, die in kationische Gruppen überführt werden können, sind stickstoffhaltige basische oder kationische Gruppen, wie Aminogruppen und Ammoniumgruppen, wobei primäre Amingruppen und davon abgeleitete Ammoniumgruppen bevorzugt ausgeschlossen sind. Diese Gruppen können zwecks Erreichung der Wasserverdünnbarkeit quarternisiert vorliegen oder sie können mit einem üblichen Neutralisationsmittel, z.B. einer organischen Monocarbonsäure, wie z.B. Ameisensäure, Essigsäure, wie dem Fachmann geläufig, in kationische Gruppen überführt werden. Vorhandene Aminogruppen sind bevorzugt sekundär und/oder tertiär. Sie können ganz oder erfindungsgemäß bevorzugt nur teilneutralisiert, beispielsweise mit einem Neutralisationsgrad von 20 bis 60 % vorliegen. Das oder die Bindemittel tragen sekundäre Amin- und/oder Hydroxylgruppen mit aktivem Wasserstoff, entsprechend einem Equivalentgewicht an aktiven Wasserstoff enthaltenden Gruppen von 150 bis 1500, bezogen auf den Festkörper des Bindemittels oder Bindemittelgemischs. Als Hydroxylgruppen sind insbesondere primäre Hydroxylgruppen bevorzugt. Es ist bevorzugt, daß die Summe von Hydroxylzahl, insbesondere Primärhydroxylzahl, plus Sekundäraminzahl des Bindemittels oder Bindemittelgemisches im erfindungsgemäßen Überzugsmittel zwischen 40 und 350 mg KOH/g, besonders bevorzugt zwischen 50 und 250 mg KOH/g beträgt. Bevorzugt liegt die Hydroxylzahl, insbesondere die Primärhydroxylzahl, zwischen 40 und 200 mg KOH/g.

Beispiele für im erfindungsgemäßen Überzugsmittel als Bindemittel verwendbare basische Amino(meth)acrylatharze und/oder Aminoepoxidharze sind sekundäre und/oder tertäre Amingruppen enthaltende Vertreter, deren Aminzahlen (Summe aus Sekundär- und/oder Tertiäraminzahl) z.B. bei 20 bis 250 mg KOH/g liegen. Das Gewichtsmittel der Molmasse (Mw) der Harze liegt bevorzugt bei 300 bis 10000. Beispiele für solche Amino(meth)acrylatharze und/oder Aminoepoxidharze sind die dem Fachmann als Bindemittel für kathodisch abscheidbare Elektrotauchlacksysteme (KTL) bekannten Amino(meth)acrylatharze und/oder Aminoepoxidharze mit sekundären Amingruppen und/oder OH-Gruppen. Beschreibungen dieser Harze und von Synthesewegen, die zu ihnen führen, sind beispielsweise den EP-A-0 082 291, EP-A-0 178 531 und EP-A-0 261 385 zu entnehmen. Diese Harze können allein oder im Gemisch als Bindemittel im erfindungsgemäßen Überzugsmittel eingesetzt werden.

Die cyclische Carbonatgruppen enthaltenden Vernetzer enthalten im Mittel zwei und mehr, bevorzugt drei und mehr cyclische Carbonatgruppen pro Molekül, entsprechend einem Equivalentgewicht an cyclischen Carbonatgruppen von 150 bis 5000, bevorzugt zwischen 200 und 3000. Die zahlenmittleren Molekularmassen (Mn) der cyclische Carbonatgruppen enthaltenden Vernetzer liegen im Bereich von 350 bis 30000, bevorzugt unter 10000, besonders bevorzugt unter 5000. Unter cyclischen Carbonatverbindungen sind im Rahmen der vorliegenden Erfindung fünf- oder sechsgliedrige cyclische Carbonatgruppen zu verstehen, wobei die fünfgliedrigen 2-Oxo-1,3-dioxolan-4'-ylgruppen bevorzugt sind. Die cyclische Carbonatgruppe kann über die 4- und/oder 5-Stellung bzw. 4-, 5- und/oder 6-Stellung an das Vernetzermolekülgerüst gebunden sein. Dies kann beispielsweise auch der Fall sein als Bestandteil eines Mehrringsystems. Die cyclischen Carbonatgruppen können in 4- und 5-Stellung bzw. 4-, 5- und/oder 6-Stellung des Cyclocarbonatrings Substituenten, z.B. Alkylgruppen, tragen.

Bevorzugt sind die cyclischen Carbonatgruppen, jedoch unsubstituiert mit Ausnahme der kovalenten Bindung bzw. der kovalenten Bindungen zum Vernetzermolekülgerüst.

Die 5-gliedrige cyclische Carbonatgruppen enthaltenden Vernetzer können aus entsprechenden Polyepoxidverbindungen aufgebaut werden durch Umsetzung von Kohlendioxid mit den Oxiranringen von Polyepoxidverbindungen. Dies kann unter Druck und erhöhter Temperatur durchgeführt werden oder es wird unter Katalyse bei niedrigem Druck oder drucklos gearbeitet, wie in der DE-A-41 29 753 beschrieben. Beispiele für Polyepoxidverbindungen, aus denen die im erfindungsgemäßen Überzugsmittel eingesetzten cyclische Carbonatgruppen enthaltenden Vernetzer durch Umsetzung mit Kohlendioxid aufgebaut werden können, sind neben den in EP-A-0 356 970 aufgeführten Polyepoxidvernetzern auch Polyglycidylverbindungen, wie Polyglycidylether, z.B. aromatische Epoxidharze auf Basis von Bisphenol A, Polyglycidylester, epoxidfunktionelle Novolake, epoxidfunktionelle Copolymerisate, z.B. Copolymere von Glycidyl(meth)acrylat, epoxidiertes Polybutadien oder durch gezielte Synthese aufgebaute Polyepoxidverbindungen, z.B. Additionsprodukte von epoxidfunktionellen Alkoholen, wie beispielsweise 3,4-Epoxytetrahydrobenzylalkohol, an Polyisocyanate, beispielsweise lackübliche Polyisocyanate, freie NCO-Gruppen aufweisende Polyurethanprepolymere oder (Meth)acrylcopolymere.

Alternativ können die cyclische Carbonatgruppen enthaltenden Vernetzer auch gezielt synthetisiert werden unter Verwendung geeigneter eine cyclische Carbonatgruppe enthaltender Monomerverbindungen, beispielsweise durch Addition von hydroxyfunktionellen Cyclocarbonaten, wie beispielsweise 4-Hydroxymethyl-2-Oxo-1,3-Dioxolan, an Polyisocyanate, beispielsweise lackübliche Polyisocyanate, freie NCO-Gruppen aufweisende Polyurethanprepolymere oder (Meth)acrylcopolymere.

Das Equivalentverhältnis von cyclischen Carbonatgruppen zu sekundären Amin- und/oder Hydroxylgruppen im erfindungsgemäßen Überzugsmittel beträgt bevorzugt zwischen 2 : 1 und 1 : 10.

Die erfindungsgemäßen Überzugsmittel können, wenn auch weniger bevorzugt, neben den erfindungswesentlichen cyclische Carbonatgruppen enthaltenden Vernetzern weitere Vernetzer enthalten, die befähigt sind mit den sekundären Amin- und/oder Hydroxylgruppen des Bindemittels zu reagieren. Beispiele für solche Vernetzer sind Aminoplastharze, blockierte Polyisocyanate, Vernetzer mit endständigen Doppelbindungen, Polyepoxidverbindungen oder Vernetzer, die umesterungsfähige und/oder umamidierungsfähige Gruppen enthalten.

Neben der erfindungswesentlichen Kombination von einem oder mehreren bevorzugt von primären Amingruppen freien Amino(meth)acrylatharzen und/oder durch Additionsreaktion von Aminverbindungen an die Epoxidgruppen von Epoxidharzen hergestellten üblichen ebenfalls bevorzugt von primären Amingruppen freien Aminoepoxidharzen mit kationischen und/oder in kationische Gruppen überführbaren Gruppen sowie aktiven Wasserstoff in Form von sekundären Amin- und/oder Hydroxylgruppen enthaltenden Gruppen sowie einem oder mehreren Vernetzern mit cyclischen Carbonatgruppen können die erfindungsgemäßen Überzugsmittel Pigmente, Füllstoffe und/oder lackübliche Additive enthalten.

Bei dem erfindungsgemäßen Einbrennüberzugsmittel handelt es sich um ein einkomponentiges Überzugsmittel, das lagerstabil ist. Das erfindungsgemäße Einbrennüberzugsmittel kann auf der Basis organischer Lösemittel formuliert sein, bevorzugt sind die basischen Gruppen des Bindemittels in diesem Fall nicht in kationische Gruppen überführt worden. Der Gegenstand der Erfindung ist ein wäßriges Einbrennüberzugsmittel, insbesondere ein kathodisch abscheidbares wäßriges Einbrennüberzugsmittel, dessen Wasserverdünnbarkeit sich aus der kationischen Stabilisierung durch die kationischen Gruppen im Bindemittel ergibt, d.h. entweder trägt das im erfindungsgemäßen Überzugsmittel eingesetzte Bindemittel kationische Gruppen oder seine basischen Gruppen werden in kationische Gruppen überführt, beispielsweise durch Quarternisierung oder sie werden bevorzugt mit einem üblichen Neutralisationsmittel, z.B. einer organischen Monocarbonsäure, wie z.B. Milchsäure, Ameisensäure, Essigsäure, wie dem Fachmann geläufig, in kationische Gruppen überführt, erfindungsgemäß bevorzugt mit einem Neutralisationsgrad zwischen 20 und 60 %.

Im Falle der bevorzugten erfindungsgemäßen KTL-Überzugsmittel handelt es sich um wäßrige Überzugsmittel mit einem Festkörper von beispielsweise 10 bis 20 Gew.-%. Der Festkörper wird gebildet aus einem oder mehreren bevorzugt von primären Amingruppen freien Amino(meth)acrylatharzen und/oder durch Additionsreaktion von Aminverbindungen an die Epoxidgruppen von Epoxidharzen hergestellten üblichen Aminoepoxidharzen mit kationischen und/oder in kationische Gruppen überführbaren Gruppen sowie aktiven Wasserstoff in Form von sekundären Amin- und/oder Hydroxylgruppen enthaltenden Gruppen sowie einem oder mehreren Vernetzern mit cyclischen Carbonatgruppen sowie gegebenenfalls weiteren Vernetzern, Pigmenten, Füllstoffen und/oder üblichen Additiven.

Beispiele für Pigmente und Füllstoffe sind die üblichen anorganischen und/oder organischen Pigmente wie Ruß, Graphit, Kohle verschiedensten Ursprungs, Titandioxid, Eisenoxid, Kaolin, Talkum oder Siliciumdioxid, Azopigmente, Phthalocyaninpigmente, aber auch Korrosionsschutzpigmente wie z.B. Zinkphosphat.

Die Pigmente können zu Pigmentpasten dispergiert werden, z.B. unter Verwendung von bekannten Pastenharzen. Solche Harze sind dem Fachmann geläufig. Beispiele für in KTL-Bädern verwendbare Pastenharze sind in der EP-A-0 183 025 und in der EP-A-0 469 497 beschrieben.

Als Additive sind die üblichen Additive für KTL-Überzugsmittel möglich. Beispiele dafür sind Netzmittel, Neutralisationsmittel, Verlaufsmittel, Katalysatoren, Antischaummittel, Lösemittel, Antikrateradditive, Lichtschutzmittel, gegebenenfalls in Kombination mit Antioxidantien.

Bevorzugt enthalten die erfindungsgemäßen KTL-Überzugsmittel Katalysatoren für die Vernetzung, wie beispielsweise die für diesen Zweck üblichen Metallverbindungen. Beispiele sind Blei-, Zinn-, Titan-, Eisen- und Lanthanverbindungen. Bevorzugt sind die in den erfindungsgemäßen KTL-Überzugsmitteln enthaltenen katalytisch wirkenden Metallverbindungen zumindest zum Teil wasserlöslich. Beispiele für geeignete wasserlösliche Metallverbindungen sind Bleiacetat und Eisenacetylacetonat. Insbesondere bevorzugt ist es jedoch, daß die erfindungsgemäßen KTL-Überzugsmittel frei von gesundheitlich bedenklichen Schwermetallverbindungen sind, beispielsweise bleifrei.

Besonders bevorzugte erfindungsgemäße KTL-Überzugsmittel sind solche, die als Katalysator einen Zusatz von Wismut als Wismutate und/oder in Form organischer Wismutkomplexe und/oder als Wismutsalze organischer Carbonsäuren, insbesondere Wismutlactat und/oder Wismutdimethylolpropionat, enthalten, wie in der DE-C-43 30 002 beschrieben.

Erfindungsgemäße KTL-Dispersionen können hergestellt werden durch Synthese der vorstehend genannten Amino(meth)acrylatharze und/oder Aminoepoxidharze in Anwesenheit oder Abwesenheit organischer Lösemittel und Überführung in eine wäßrige Dispersion durch Verdünnen der zuvor mit Säure erfindungsgemäß bevorzugt nur teilneutralisierten Bindemittel mit Wasser. Das oder die Bindemittel können im Gemisch mit einem oder mehreren Vernetzern mit cyclischen Carbonatgruppen vorliegen und gemeinsam mit diesen in die wäßrige Dispersion überführt werden. Organisches Lösemittel kann, sofern vorhanden, vor oder nach Überführung in die wäßrige Dispersion bis zum gewünschten Gehalt entfernt werden, beispielsweise durch Destillation im Vakuum. Die nachträgliche Entfernung von Lösemitteln kann beispielsweise vermieden werden, wenn die Bindemittel im lösemittelarmen oder -freien Zustand, z.B. als lösemittelfreie Schmelze bei Temperaturen von beispielsweise bis zu 140°C mit Säure neutralisiert und anschließend mit Wasser in die KTL-Dispersion überführt werden. Ebenfalls ist es möglich, die Entfernung organischer Lösemittel zu vermeiden, wenn die Bindemittel als Lösung in einem radikalisch polymerisierbaren, olefinisch ungesättigten Monomeren vorgelegt werden oder die Bindemittelsynthese in einem radikalisch polymerisierbaren Monomeren (z.B. Styrol) als Lösemittel durchgeführt wird, danach durch Neutralisation mit Säure und Verdünnen mit Wasser in eine wäßrige Dispersion überführt wird und anschließend das radikalisch polymerisierbare Monomere auspolymerisiert wird.

Die erfindungsgemäßen lösemittelbasierenden oder bevorzugt wäßrigen Überzugsmittel können mit den üblichen Applikationsmethoden wie Spritzen, Tauchen, insbesondere jedoch durch kathodische Elektroabscheidung im Rahmen einer Einschicht- oder Mehrschichtlackierung auf verschiedene elektrisch leitfähige oder elektrisch leitfähig gemachte Substrate, insbesondere metallische Substrate, wie beispielsweise Automobilkarossen oder Teile davon aufgebracht und eingebrannt werden. Typische Einbrenntemperaturen für aus den erfindungsgemäßen Überzugsmitteln aufgebrachte Überzugsfilme liegen bei 80 bis 220°C, bevorzugt zwischen 120 und 180°C. Die aus den erfindungsgemäßen Überzugsmitteln erzeugten Lackschichten können mit ein oder mehreren weiteren Lackschichten versehen werden.

Die erfindungsgemäßen Überzugsmittel sind stabil, beispielsweise neigen sie nicht zur vorzeitigen Alterung durch im Lack beginnende Vernetzung und sie erlauben eine Vernetzung durch Einbrennen ohne Abgabe von Spaltprodukten. Die erfindungsgemäß bevorzugten KTL-Überzugsmittel können mit geringen Mengen an Säure neutralisiert sein, entsprechend einer nur teilweisen Neutralisation des Bindemittels.

## Patentansprüche

1. Wäßriges Einbrennüberzugsmittel für das kathodische Elektrotauchlackierverfahren auf der Basis mindestens eines aus Amino(meth)acrylatharzen und/oder durch Additionsreaktion von Aminverbindungen an die Epoxidgruppen von Epoxidharzen herstellbaren Aminoepoxidharzen ausgewählten Bindemittels mit kationischen Gruppen und/oder in kationische Gruppen überführbaren Gruppen, wobei das Bindemittel außerdem cyclische Carbonatgruppen aufweist und/oder mindestens ein Vernetzer mit cyclischen Carbonatgruppen vorliegt und wobei das Bindemittel sekundäre Aminogruppen und/oder Hydroxylgruppen enthält.

2. Wäßriges Einbrennüberzugsmittel nach Anspruch 1, dadurch gekennzeichnet, daß das Bindemittel frei von primären Aminogruppen ist.

3. Wäßriges Einbrennüberzugsmittel nach Anspruch 1 oder 2, dadurch gekennzeichnet, daß das Equivalentgewicht an aktiven Wasserstoff enthaltenden Gruppen 150 bis 1500, bezogen auf den Festkörper des Bindemittels, beträgt.

4. Wäßriges Einbrennüberzugsmittel nach einem der Ansprüche 1 bis 3, dadurch gekennzeichnet, daß die Summe der Hydroxylzahl und der Sekundäraminzahl 40 bis 350 mg KOH/g beträgt.

5. Wäßriges Einbrennüberzugsmittel nach einem der Ansprüche 1 bis 4, dadurch gekennzeichnet, daß der Vernetzer eine zahlenmittlere Molmasse (Mn) von 350 bis 30000 aufweist, und im Mittel mindestens 2 cyclische Carbonatgruppen pro Molekül enthält, entsprechend einem Equivalentgewicht an cyclischen Carbonatgruppen von 150 bis 5000.

6. Wäßriges Einbrennüberzugsmittel nach einem der Ansprüche 1 bis 5, dadurch gekennzeichnet, daß der Neutralisationsgrad des Bindemittels 20 bis 60 % beträgt.

7. Verwendung des wäßrigen Einbrennüberzugsmittels nach einem der Ansprüche 1 bis 6 für das kathodische Elektrotauchlackierverfahren.

## Claims

1. Aqueous stoving coating agent for the cathodic electrocoating process based on at least one binding agent selected from amino(meth)acrylate resins and/or aminoepoxy resins which can be produced through an addition reaction of amine compounds with the epoxy groups of epoxy resins, with cationic groups and/or groups which can be converted to cationic groups, wherein the binding agent also comprises cyclic carbonate groups and/or at least one crosslinking agent with cyclic carbonate groups is present, and wherein the binding agent contains secondary amino groups and/or hydroxyl groups.

2. Aqueous stoving coating agent according to Claim 1, characterised in that the binding agent is free from primary amino groups.

3. Aqueous stoving coating agent according to Claim 1 or 2, characterised in that the equivalent weight of groups containing active hydrogen is 150 to 1500, related to the solids of the binding agent.

4. Aqueous stoving coating agent according to any one of Claims 1 to 3, characterised in that the sum of the hydroxyl number and the secondary amine number is 40 to 350 mg KOH/g.

5. Aqueous stoving coating agent according to any one of Claims 1 to 4, characterised in that the crosslinking agent has a number-average molar mass (Mn) of 350 to 30000, and on average contains at least 2 cyclic carbonate groups per molecule, corresponding to an equivalent weight of cyclic carbonate groups of 150 to 5000.

6. Aqueous stoving coating agent according to any one of Claims 1 to 5, characterised in that the degree of neutralisation of the binding agent is 20 to 60 %.

7. Use of the aqueous stoving coating agent according to any one of Claims 1 to 6 for the cathodic electrocoating process.

## Revendications

1. Composition aqueuse de revêtement thermodurcissable destinée à un procédé de revêtement par électrodéposition cathodique à base d'au moins un liant comportant des groupes cationiques et/ou des groupes pouvant être transformés en groupes cationiques, choisi parmi les résines amino(méth)aciylates et/ou les résines aminoépoxydes pouvant être préparées par réaction d'addition de composés aminés sur des groupes époxydes de résines époxydes, le liant présentant, en outre, des groupes carbonates cycliques et/ou au moins un agent réticulant comportant des groupes carbonates cycliques étant présent et le liant contenant des groupes amino secondaires et/ou des groupes hydroxyles.

2. Composition aqueuse de revêtement thermodurcissable selon la revendication 1, caractérisée en ce que le liant est exempt de groupes amino primaires.

3. Composition aqueuse de revêtement thermodurcissable selon la revendication 1 ou 2, caractérisée en ce que le poids équivalent des groupes contenant de l'hydrogène actif est compris entre 150 et 1 500, rapporté à la matière solide du liant.

4. Composition aqueuse de revêtement thermodurcissable selon l'une des revendications 1 à 3, caractérisée en ce que la somme de l'indice hydroxyle et de l'indice d'amine secondaire est comprise entre 40 et 350 mg KOH/g.

5. Composition aqueuse de revêtement thermodurcissable selon l'une des revendications 1 à 4, caractérisée en ce que l'agent réticulant présente une masse moléculaire moyenne en nombre (Mn) comprise entre 300 et 30 000 et en moyenne au moins deux groupes carbonates cycliques par molécule, correspondant à un poids équivalent en groupes carbonates cycliques compris entre 150 et 5 000.

6. Composition aqueuse de revêtement thermodurcissable selon l'une des revendicaations 1 à 5, caractérisée en ce que le taux de neutralisation du liant est compris entre 20 et 60 %.

7. Utilisation de la composition aqueuse de revêtement thermodurcissable selon l'une des revendications 1 à 6 dans un procédé de revêtement par électrodéposition cathodique.
